# EUROPEAN PATENT SPECIFICATION

(11) **EP 4 524 799 B1**
(45) Date of publication and mention of the grant of the patent: **02.12.2026**
(21) Application number: 24200398.6
(22) Date of filing: 13.09.2024
(51) Int. Cl.: G06F 21/62

(54) **ASSEMBLY CONTROL WITH AUTHENTICATION OF USER**
MONTAGESTEUERUNG MIT AUTHENTIFIZIERUNG EINES BENUTZERS
COMMANDE D'ASSEMBLAGE AVEC AUTHENTIFICATION D'UTILISATEUR

(30) Priority: 15.09.2023 US 202318468365
(43) Date of publication of application: 19.03.2025
(73) Proprietor: RTX Corporation, Farmington, CT 06032 (US)
(72) Inventor: ADAMSKI, Paul A., Farmington, 06032 (US); ABRHAM, Anteneh B., Farmington, 06032 (US); ADAMSKI, Alison K., Farmington, 06032 (US); DEJESUS, Jason, Farmington, 06032 (US)
(74) Representative: Dehns

(56) References cited:
- US-A1- 2010 235 896
- US-A1- 2016 323 112

## Description

### BACKGROUND OF THE INVENTION

This application relates to a control for an assembly that allows limited access to user, and wherein there is an authentication process.

Modem assemblies are being provided with more and more complex controls. One example is an aircraft having gas turbine engines. A main control for the gas turbine engine is known as a full authority digital electronic controller ("FADEC").

In existing controllers, users, authorized or not, often have undesirably broad access.

US 2010/235896 A1 discloses a system for centrally managing a set of network-connected laboratory instruments.

US 2016/323112 A1 discloses a system and method to provide secure credentials using a secure credential package stored on a client device and at least one key stored in a corporate network.

### SUMMARY OF THE INVENTION

According to a first aspect of the invention there is provided an gas turbine engine according to claim 1.

According to a second aspect of the invention there is provided a method according to claim 9.

The present disclosure may include any one or more of the individual features disclosed above and/or below alone or in any combination thereof.

These and other features of the present invention can be best understood from the following specification and drawings, the following of which is a brief description.

### BRIEF DESCRIPTION OF THE DRAWINGS

Certain exemplary embodiments will now be described in greater detail by way of example only and with reference to the accompanying drawings in which:
Figure 1A schematically shows a gas turbine engine on an aircraft.
Figure 1B is a block diagram of a control system.
Figure 2 schematically shows a landscape of a user access system.
Figure 3 schematically shows a user's credential file.
Figure 4 is a flow chart of credential file validation.
Figure 5 is a flow chart of role definition.
Figure 6 is a flow chart of command processing.

### DETAILED DESCRIPTION

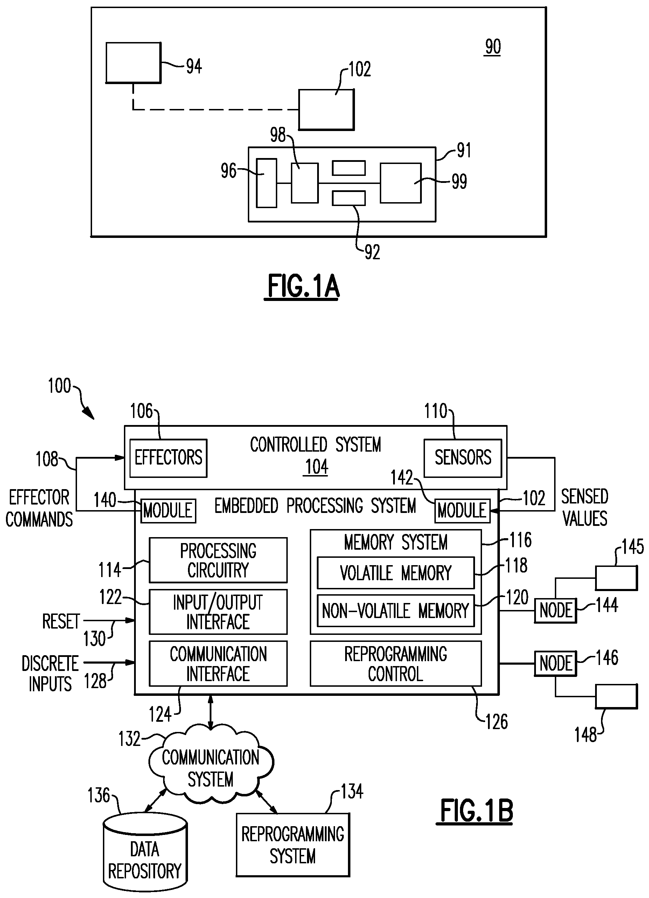

Figure 1A schematically shows an assembly 90. A gas turbine engine 91 is shown as associated with an aircraft 90. The gas turbine engine 91 is the assembly for purposes of this disclosure. Gas turbine engine 91 has a fan 96, a compressor section 98, a combustor section 97 and a turbine section 99. It should be understood that this is a highly schematic description.

As shown, an embedded processing system 102 communicates with a control 94 on the aircraft 90. The embedded processing system 102 may be a full authority digital electronic controller or FADEC for engine 91.

Figure 1B shows details of a system 100 including the embedded processing system 102 and a controlled system 104. Here, the controlled system 104 may include systems on the gas turbine engine of Figure 1A.

The Figure 1B system includes the embedded processing system 102 and a controlled system. The controlled system 104 can be any type of physical system that includes one or more effectors 106 controlled by one or more effector commands 108. The effector commands 108 are received from a module 140 associated with the embedded processing system 100.

Examples of effectors can include one or more motors, solenoids, valves, relays, pumps, heaters and/or other such actuation control components.

As also shown, systems 145 and 148 may have control nodes 144 and 146 that communicate to the embedded processing system 102. As an example, the system 145 may be an anti-ice system.

A plurality of sensors 110 can capture state data associated with the controlled system 104 and provide sensed values 112 as feedback to a module 142 in the embedded processing system 102 to enable closed-loop control of the controlled system 104 according to one or more control laws.

Examples of the sensors can include one or more temperature sensors, pressure sensors, strain gauges, level sensors, accelerometers, rate sensors, and the like.

While modules 140 and 142 are shown as part of the embedded processing system 102, nodes 144 and 146 are outside but communicating with embedded processing system 102.

For purposes of explanation, embodiments are primarily described with respect to a gas turbine engine system for an aircraft 90 as the controlled system and assembly, and in particular, the gas turbine engine 91.

In the Figure 1B example, the embedded processing system 102 includes processing circuitry 114 and a memory system 116 configured to store a plurality of configuration items, where at least one of the configuration items includes a sequence of computer executable instructions for execution by the processing circuitry 114. Types of configuration items can include data, such as constants, configurable data, and/or fault data. Examples of computer executable instructions can include software, operating system software, and/or application software. The executable instructions can be stored or organized in any manner and at any level of abstraction, such as in connection with controlling and/or monitoring operation of the controlled system 104. The processing circuitry can be any type or combination of central processing unit ("CPU"), including one or more of: a microprocessor, a digital signal processor, a microcontroller, an application specific integrated circuit, a field programmable gate array, or the like.

In embodiments, the memory system may include volatile memory 118 such as random access memory, and non-volatile memory 120, such as flash memory, read only memory, and/or other electronic, optical, magnetic, or any other computer readable medium onto which is stored data and algorithms in a non-transitory form.

The embedded processing system 102 can also include one or more of an input/output interface 122, a communication interface 124, a reprogramming control 126, and/or other elements.

The input/output interface 122 can include support circuitry for interfacing with the effectors 106 and sensors 110, such as filters, amplifiers, digital-to-analog converters, analog-to-digital converters, and other such circuits to support digital and/or analog interfaces. Further, the input/output interface 122 can receive or output signals to/from other sources. As one example, discrete inputs 128 can be input to the input/output interface to establish an operating mode of the embedded processing system 102, or to trigger actions by the embedded processing system 102.

A reset signal 130 may also be internally introduced as a result of power detected by power conditioning circuitry, and by specific hardware or software direction. The communication interface 124 can be coupled to a communication system 132, which can include one or more direct or network communication links to systems such as a reprogramming system 134, a data repository 136, or another system. The communication system 132 may also communicate with the control 94 on the associated aircraft 90.

The reprogramming system 134 can be any type of computer system operable to load new/updated configuration items to the embedded processing system 102 for storage in the memory system 116. The reprogramming system 134 can interface to the communication system 132 to a wired, wireless, optical, or magnetic coupling. The data repository 136 can serve as a data source for updating the memory system 116, for instance, with control system data, or as a data sync to offload and clear data from the memory systems, such as fault data, history data, and the like.

Access to an embedded processing system such as that disclosed above is required for many purposes such as diagnostics testing, reprogramming, data collection, etc. In the past users may have gained access to such a system without appropriate limits on access to unauthorized users. Moreover, it is often true that an authorized user for one purpose has access beyond that one purpose.

It has been proposed in the past to have access limited to such a processing system based upon a user's defined role. However, it is desirable to provide further details of how to best do so.

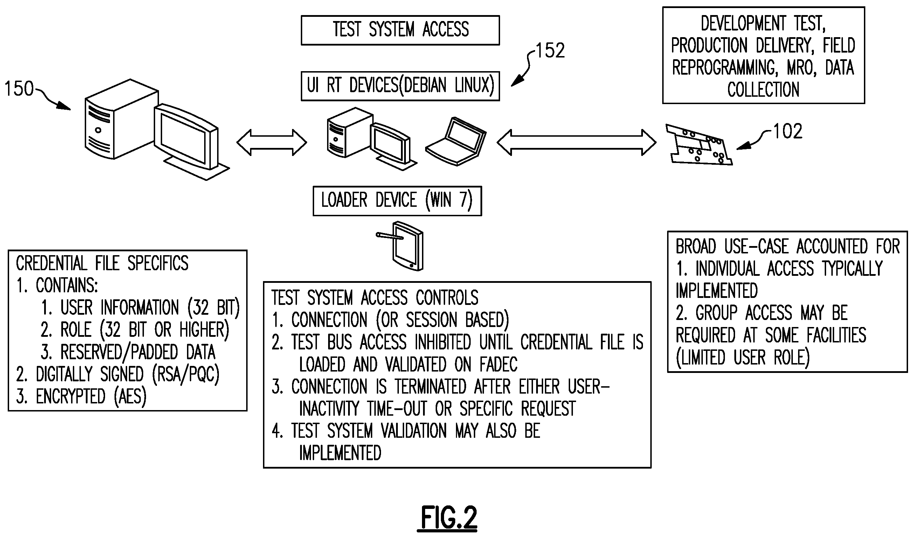

As shown in Figure 2, a landscape allows the embedded processing system 102 to have the ability to control access across its lifetime. As shown, a credential is created at 150 in a factory environment that will limit users to specific roles. A credential file is prepared for each user. The credential file typically includes user information, and a role for a plurality of users. There may also be reserved or padded data providing space should there come a time when additional information would be desirable.

This credential is digitally signed, for example, by post quantum cryptography ("PQC") or RSA. Further, the information is all encrypted. Once the embedded processing system 102 is operational, test system access would be determined at 152. A user would supply their credential file. The processing system 102 would have access inhibited until an appropriate credential file is loaded and validated. A connection is terminated after either user inactivity for a period of time, or a specific request. The test system being used may also be provided with validation functions.

This would allow tests to take place on the processing system and the associated assembly over its lifetime.

The processing system 102 is shown schematically. Further development tests, production delivery, fuel delivery, programming, maintenance repair or overall and data collection would also occur across the lifetime of the processing system. Again, individual access will typically be implemented. However, group access may be required at some facilities but still with limited user role.

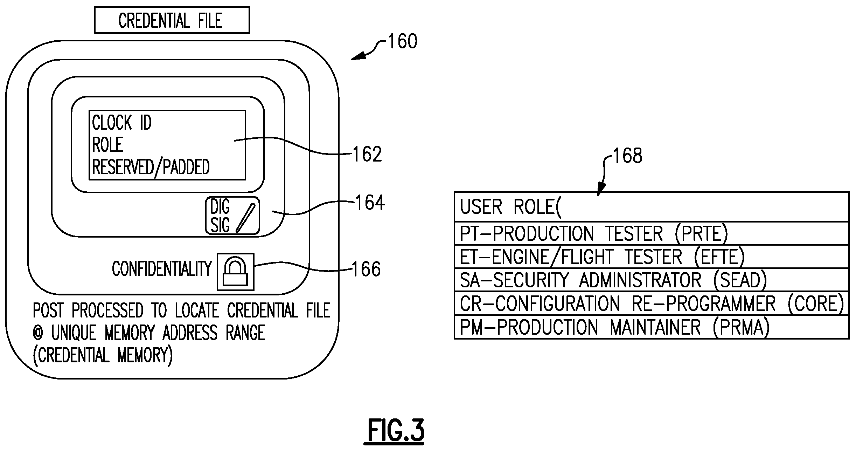

Figure 3 shows an example of a credential file of a particular user. At 160, a credential file is shown that a user would typically deliver to the embedded processing system to gain access. At 162 there is an embedded clock ID and role as mentioned above. This information is digitally signed at 164 as mentioned above. It is then encrypted at 166. The credential file is delivered in some manner such as a USB plug being plugged in and delivering the information. Other ways of delivering information may also be utilized. As one example, the user may send a file transferred to the embedded processing system.

At 168 typical user roles are listed, to provide examples of the roles that may be appropriate for particular individuals. As can be seen, some individuals may be authorized to test. A security administrator may need access to logs, as explained below. In particular, attempts to gain improper access are logged and an administrator may need access. There may be a re-programmer or a production maintenance individual. This is not an exhaustive list.

As shown in Figure 3, the credential file is post processed prior to being sent to the FADEC. Essentially a wrapper is placed around the file prior to sending it to the FADEC with load content and a location. The FADEC looks for certain expected information in the wrapper which will tell the FADEC a load location. In this way the FADEC knows where to put the information.

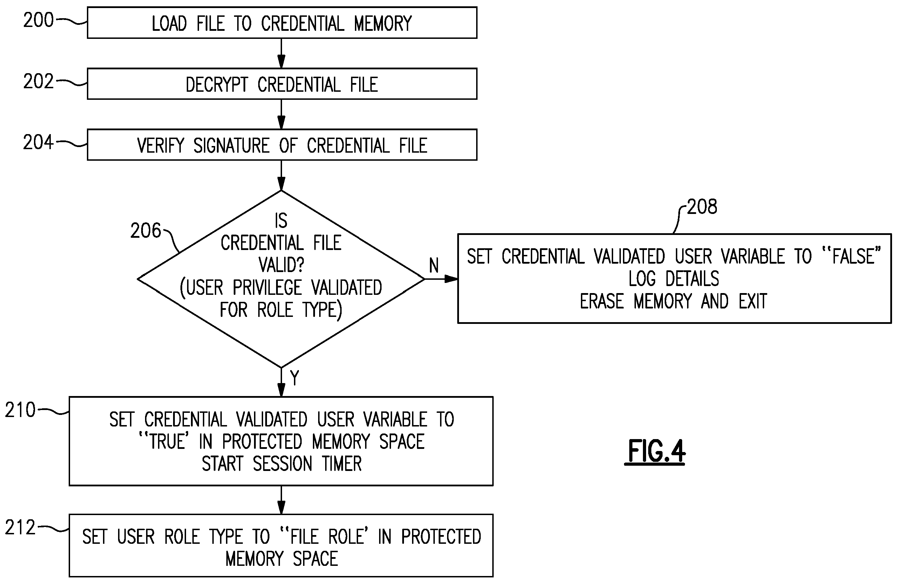

Figure 4 is a flow chart of how the embedded processing system might validate a credential file. At step 200 the credential file is loaded to a credential memory. At step 202 a received credential file is decrypted. At step 204 the credential file is verified. At step 206 if the credential file is valid, then user privilege is validated based upon the role type. If the credential file is not found valid then at step 208 the processing system sets the credential validated user variable to "FALSE." Details are logged including the attempted user's identity. The memory is erased and the system exits.

At step 210 if the credential file is found valid at step 206, the credential validated user variable is set to TRUE in a protected memory space, and a section timer is started. At step 212 the user role type is also stored in memory to allow access to certain areas, and deny access in others.

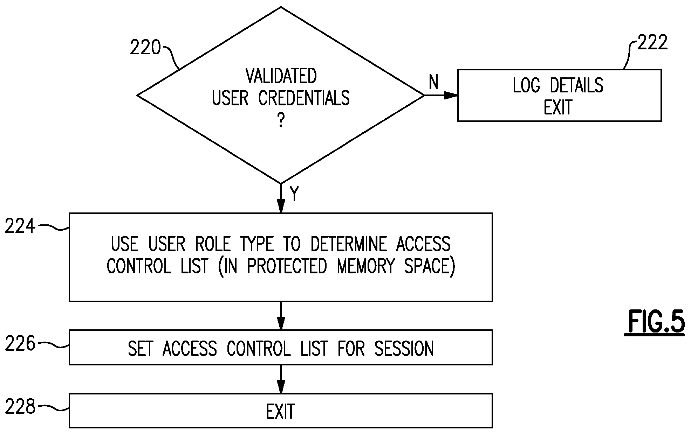

Figure 5 is a flow chart of defining a role of a particular user. Again, at step 220 the credentials of a user are validated. If they are found invalid at step 222 details are logged and the system exits. However, if the credentials are validated at step 220 then at step 224 a user role type is identified to determine an access control list. At step 226 an access control list is set for the particular session.

A worker of skill in this art would recognize that if the embedded processing system is say a FADEC there would be hundreds of different test protocols as an example. Not all test engineers would have access to all such tests. Thus, the access is typically not as broad as all testing. At step 228 the system exits at the end of the session.

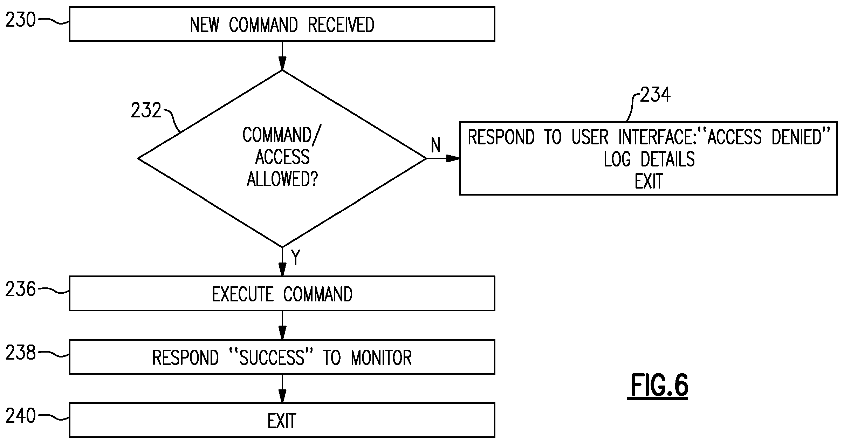

Figure 6 shows a flow chart for processing a received command. At step 230 a new command is received. At step 232 the system asks if the command received is something that the identified user has authority or access for. If not, at step 234 a user interface is provided with response "ACCESS DENIED." Details are logged and the system exits. However, if step 232 finds that the access is allowed, then at step 236 a command is executed. At step 238 a response of "SUCCESS" is provided to the user interface. At step 240 the system exits.

An embedded processing system and access combination under this disclosure could be said to include processing circuitry, a memory system, and a plurality of user credential files. The user credential files include an encrypted user identifier, and an encrypted list of authorized task role the particular user would have within the embedded processing system. Expected credentials from the user credential files is stored in the memory system. The processing system is programmed to receive a user credential file from a user, and compare expected credentials within the memory system to identify if the user is an authorized user. The processing system allows access to an authorized user and denies access to an unauthorized user and determines what task roles are authorized for the validated user, and deny access for the authorized user to other task roles.

A method of operating an embedded processing system under this disclosure could be said to include providing a plurality of user credential files that include an identifier for the particular user, and task roles that are authorized for each of the users, and encrypting the user credential files. Expected valid user information and access information is stored at a memory within the embedded processing system. One of the user credential files is received at the embedded processing system, and checking the received user credential file against the stored expected valid user information and access information. Access is denied should the received user credential file not be validated from the expected user information. The user is allowed access if the received user credential file matches the expected valid user information. An access control list is set by accessing the access information in the memory. Allowing access for the authorized user to the authorized tasks during a session and denying access for any unauthorized tasks.

Although embodiments of this disclosure have been shown, a worker of ordinary skill in this art would recognize that several modifications would come within the scope of this disclosure. For that reason, the following claims should be studied to determine the true scope and content of this disclosure.

## Claims

1. A gas turbine engine (91) comprising a mechanical system and an embedded processing system (102) and access combination for the mechanical system;
wherein the embedded processing system (102) and access combination comprises:
processing circuitry (114);
a memory system (116);
a plurality of user credential files, the user credential files including an encrypted user identifier, and an encrypted list of authorized task roles the particular user would have within the embedded processing system;
wherein the memory system (116) stores expected credentials from the user credential files;
and
the processing system is programmed to receive a user credential file from a user, and compare the received user credential file to expected credentials within the memory system to identify if the user is an authorized user, and the processing system is programmed to allow access to an authorized user and deny access to an unauthorized user and determine what task roles are authorized for the authorized user, and deny access for the authorized user to other tasks.

2. The gas turbine engine (91) as set forth in claim 1, wherein the mechanical system is at least one of a fan (96), a compressor section (98), a combustor section (97) and/or a turbine section (99) of the gas turbine engine (91).

3. The gas turbine engine (91) as set forth in claim 1, wherein the user credential file is digitally signed.

4. The gas turbine engine (91) as set forth in claim 1, wherein if the received user credential file is not validated, then a failure is logged and stored in a log memory including the identity of the unauthorized user.

5. The gas turbine engine (91) as set forth in claim 3, wherein if the user attempts to perform a task that is not authorized, access is denied, and the incident is logged and stored in a log memory; and, optionally,
wherein one level of access is a security access to the log memory.

6. The gas turbine engine (91) as set forth in claim 1, wherein one level of access is the ability to re-program the embedded processing system.

7. The gas turbine engine (91) as set forth in claim 1, wherein one level of access is at least one of maintenance, repair or overhaul.

8. The gas turbine engine (91) as set forth in claim 1, wherein one level of access is at least one type of testing.

9. A method of operating an embedded processing system (102) in gas turbine engine (91), the embedded processing system (102) for a mechanical system of the gas turbine engine (91); the method comprising:
providing a plurality of user credential files that include an identifier for each of a plurality of users, and tasks that are authorized for each of the plurality users, and encrypting the credential files;
storing expected valid user information and access information at a memory within the embedded processing system;
receiving one of the user credential files at the embedded processing system, and checking the received user credential file against the stored expected valid user information and access information;
denying the user access should the received user credential file not be validated from the expected user information;
allowing the user access if the received user credential file matches the expected valid user information;
setting an access control list of authorized task roles by accessing the access information in the memory; and
allowing access for the user to the authorized task roles during a session and denying access for any other task roles.

10. The method as set forth in claim 9, wherein the credential file is digitally signed.

11. The method as set forth in claim 9, wherein if said received user credential file is not validated, then the failure is logged, and stored in a log memory, including the user's identity.

12. The method as set forth in claim 10, wherein if the user attempts to perform a task role that is not authorized, access is denied, and the incident is logged and stored in the log memory.

13. The method as set forth in claim 11, wherein one level of authorized access is a security access to the log memory.

14. The method as set forth in claim 9, wherein one level of authorized access is the ability to re-program the embedded processing system; or
wherein one level of access is one of maintenance, repair or overhaul; or
wherein one level of access is at least one type of testing; or
wherein a session is ended after a period of time without activity, or when the user requests an exit.

## Patentansprüche

1. Gasturbinentriebwerk (91), umfassend ein mechanisches System und ein eingebettetes Verarbeitungssystem (102) und eine Zugriffskombination für das mechanische System;
wobei das eingebettete Verarbeitungssystem (102) und die Zugriffskombination Folgendes umfassen:
Verarbeitungsschaltung (114);
ein Speichersystem (116);
eine Vielzahl von Benutzer-Berechtigungsnachweisdateien, wobei die Benutzer-Berechtigungsnachweisdateien eine verschlüsselte Benutzerkennung und eine verschlüsselte Liste mit autorisierten Aufgabenrollen beinhalten, die der bestimmte Benutzer innerhalb des eingebetteten Verarbeitungssystems einnehmen würde;
wobei das Speichersystem (116) erwartete Berechtigungsnachweise aus den Benutzer-Berechtigungsnachweisdateien speichert; und
das Verarbeitungssystem programmiert ist, um eine Benutzer-Berechtigungsnachweisdatei von einem Benutzer zu empfangen und die empfangene Benutzer-Berechtigungsnachweisdatei mit erwarteten Berechtigungsnachweisen innerhalb des Speichersystems zu vergleichen, um zu identifizieren, ob der Benutzer ein autorisierter Benutzer ist, und
das Verarbeitungssystem programmiert ist, um einem autorisierten Benutzer Zugriff zu erlauben und einem nicht autorisierten Benutzer Zugriff zu versagen und zu bestimmen, welche Aufgabenrollen für den autorisierten Benutzer autorisiert sind und Zugriff für den autorisierten Benutzer auf andere Aufgaben zu versagen.

2. Gasturbinentriebwerk (91) nach Anspruch 1, wobei das mechanische System mindestens eines von einem Fan (96), einem Verdichterabschnitt (98), einem Brennkammerabschnitt (97) und/oder einem Turbinenabschnitt (99) des Gasturbinentriebwerks (91) ist.

3. Gasturbinentriebwerk (91) nach Anspruch 1, wobei die Benutzer-Berechtigungsnachweisdatei digital unterschrieben ist.

4. Gasturbinentriebwerk (91) nach Anspruch 1, wobei, wenn die empfangene Benutzer-Berechtigungsnachweisdatei nicht für gültig erklärt ist, dann eine Fehlfunktion protokolliert wird und in einem Protokollspeicher einschließlich der Identität des nicht autorisierten Benutzers gespeichert wird.

5. Gasturbinentriebwerk (91) nach Anspruch 3, wobei, wenn der Benutzer versucht, eine Aufgabe durchzuführen, die nicht autorisiert ist, Zugriff versagt wird und der Vorfall in einem Protokollspeicher protokolliert und gespeichert wird; und wahlweise,
wobei eine Zugriffsebene ein Sicherheitszugriff auf den Protokollspeicher ist.

6. Gasturbinentriebwerk (91) nach Anspruch 1, wobei eine Zugriffsebene die Fähigkeit ist, das eingebettete Verarbeitungssystem neu zu programmieren.

7. Gasturbinentriebwerk (91) nach Anspruch 1, wobei eine Zugriffsebene mindestens eines von Wartung, Reparatur oder Überholung ist.

8. Gasturbinentriebwerk (91) nach Anspruch 1, wobei eine Zugriffsebene mindestens eine Art des Testens ist.

9. Verfahren zum Betreiben eines eingebetteten Verarbeitungssystems (102) in einem Gasturbinentriebwerk (91), wobei das eingebettete Verarbeitungssystem (102) für ein mechanisches System des Gasturbinentriebwerks (91) ist; wobei das Verfahren Folgendes umfasst:
Bereitstellen einer Vielzahl von Benutzer-Berechtigungsnachweisdateien, die eine Kennung für jeden einer Vielzahl von Benutzern beinhaltet, und Aufgaben, die für jeden der Vielzahl von Benutzern autorisiert sind, und Verschlüsseln der Berechtigungsnachweisdateien;
Speichern erwarteter gültiger Benutzerinformationen und Zugriffsinformationen in einem Speicher innerhalb des eingebetteten Verarbeitungssystems;
Empfangen einer der Benutzer-Berechtigungsnachweisdateien in dem eingebetteten Verarbeitungssystem und Prüfen der empfangenen Benutzer-Berechtigungsnachweisdatei gegen die gespeicherten erwarteten gültigen Benutzerinformationen und Zugriffsinformationen;
Versagen des Benutzerzugriffs, sollte die empfangene Benutzer-Berechtigungsnachweisdatei nicht durch die erwarteten Benutzerinformationen für gültig erklärt werden;
Erlauben des Benutzerzugriffs, wenn die empfangene Benutzer-Berechtigungsnachweisdatei den erwarteten gültigen Benutzerinformationen entspricht;
Einstellen einer Zugriffskontrollliste mit autorisierten Aufgabenrollen durch Zugreifen auf die Zugriffsinformationen in dem Speicher; und
Erlauben des Zugriffs für den Benutzer auf die autorisierten Aufgabenrollen während einer Sitzung und Versagen des Zugriffs auf alle anderen Aufgabenrollen.

10. Verfahren nach Anspruch 9, wobei die Berechtigungsnachweisdatei digital unterschrieben ist.

11. Verfahren nach Anspruch 9, wobei, wenn die empfangene Benutzer-Berechtigungsnachweisdatei nicht für gültig erklärt ist, dann die Fehlfunktion protokolliert wird und einschließlich der Identität des Benutzers in einem Protokollspeicher gespeichert wird.

12. Verfahren nach Anspruch 10, wobei, wenn der Benutzer versucht, eine Aufgabenrolle durchzuführen, die nicht autorisiert ist, Zugriff versagt wird und der Vorfall in dem Protokollspeicher protokolliert und gespeichert wird.

13. Verfahren nach Anspruch 11, wobei eine Ebene autorisierten Zugriffs ein Sicherheitszugriff auf den Protokollspeicher ist.

14. Verfahren nach Anspruch 9, wobei eine Ebene autorisierten Zugriffs die Fähigkeit zum Neuprogrammieren des eingebetteten Verarbeitungssystems ist; oder
wobei eine Zugriffsebene eines von Wartung, Reparatur oder Überholung ist; oder
wobei eine Zugriffsebene mindestens eine Art des Testens ist; oder
wobei eine Sitzung nach einem Zeitabschnitt ohne Aktivität oder wenn der Benutzer eine Beendung erfragt, beendet wird.

## Revendications

1. Moteur à turbine à gaz (91) comprenant un système mécanique, un système de traitement embarqué (102) et une combinaison d'accès pour le système mécanique ;
dans lequel le système de traitement embarqué (102) et la combinaison d'accès comprennent :
un circuit de traitement (114) ;
un système de mémoire (116) ;
une pluralité de fichiers d'identifiants utilisateur, les fichiers d'identifiants utilisateur comportant un identifiant utilisateur chiffré et une liste chiffrée de rôles de tâches autorisés que l'utilisateur spécifique serait habilité à exercer au sein du système de traitement embarqué ;
dans lequel le système de mémoire (116) stocke les identifiants attendus à partir des fichiers d'identifiants utilisateur ; et
le système de traitement est programmé pour recevoir un fichier d'identifiants utilisateur provenant d'un utilisateur, et pour comparer le fichier d'identifiants utilisateur reçu avec les identifiants attendus stockés dans le système de mémoire afin de déterminer si l'utilisateur est un utilisateur autorisé, et
le système de traitement est programmé pour autoriser l'accès à un utilisateur autorisé et refuser l'accès à un utilisateur non autorisé et pour déterminer les rôles de tâches autorisés pour l'utilisateur autorisé et pour refuser l'accès à l'utilisateur autorisé à d'autres tâches.

2. Moteur à turbine à gaz (91) selon la revendication 1, dans lequel le système mécanique est au moins l'un parmi un ventilateur (96), une section de compresseur (98), une section de chambre de combustion (97) et/ou une section de turbine (99) du moteur à turbine à gaz (91).

3. Moteur à turbine à gaz (91) selon la revendication 1, dans lequel le fichier d'identifiants utilisateur est signé numériquement.

4. Moteur à turbine à gaz (91) selon la revendication 1, dans lequel si le fichier d'identifiants utilisateur reçu n'est pas validé, un échec est alors consigné, puis stocké dans une mémoire de journalisation, avec indication de l'identité de l'utilisateur non autorisé.

5. Moteur à turbine à gaz (91) selon la revendication 3, dans lequel, si l'utilisateur tente d'effectuer une tâche non autorisée, l'accès lui est refusé et l'incident est consigné, puis stocké dans une mémoire de journalisation ; et, éventuellement,
dans lequel un niveau d'accès est un accès de sécurité à la mémoire de journalisation.

6. Moteur à turbine à gaz (91) selon la revendication 1, dans lequel un niveau d'accès consiste à pouvoir reprogrammer le système de traitement embarqué.

7. Moteur à turbine à gaz (91) selon la revendication 1, dans lequel un niveau d'accès correspond au moins à l'une des opérations suivantes : maintenance, réparation ou révision.

8. Moteur à turbine à gaz (91) selon la revendication 1, dans lequel un niveau d'accès correspond à au moins un type de test.

9. Procédé de fonctionnement d'un système de traitement embarqué (102) dans un moteur à turbine à gaz (91), le système de traitement embarqué (102) étant destiné à un système mécanique du moteur à turbine à gaz (91) ; le procédé comprenant :
la fourniture d'une pluralité de fichiers d'identifiants utilisateur qui comprennent un identifiant pour chacun d'une pluralité d'utilisateurs, et des tâches autorisées pour chacun de la pluralité d'utilisateurs, et le chiffrement des fichiers d'identifiants ;
le stockage des informations utilisateur valides attendues et des informations d'accès dans une mémoire au sein du système de traitement embarqué ;
la réception de l'un des fichiers d'identifiants utilisateur au niveau du système de traitement embarqué, et la vérification du fichier d'identifiants utilisateur reçu par rapport aux informations utilisateur valides attendues et aux informations d'accès stockées ;
le refus de l'accès à l'utilisateur si le fichier d'identifiants utilisateur reçu n'est pas validé à partir des informations utilisateur attendues ;
l'autorisation de l'accès à l'utilisateur si le fichier d'identifiants utilisateur reçu correspond aux informations utilisateur valides attendues ;
la définition d'une liste de contrôle d'accès de rôles de tâches autorisés en accédant aux informations d'accès dans la mémoire ; et
l'autorisation de l'accès pour l'utilisateur aux rôles de tâches autorisés pendant une session et le refus de l'accès à tout autre rôle de tâche.

10. Procédé selon la revendication 9, dans lequel le fichier d'identifiants est signé numériquement.

11. Procédé selon la revendication 9, dans lequel si ledit fichier d'identifiants utilisateur reçu n'est pas validé, l'échec est alors consigné, puis stocké dans une mémoire de journalisation, avec indication de l'identité de l'utilisateur.

12. Procédé selon la revendication 10, dans lequel, si l'utilisateur tente d'exercer un rôle de tâche pour lequel il n'est pas autorisé, l'accès lui est refusé et l'incident est consigné, puis stocké dans la mémoire de journalisation.

13. Procédé selon la revendication 11, dans lequel un niveau d'accès autorisé correspond à un accès sécurisé à la mémoire de journalisation.

14. Procédé selon la revendication 9, dans lequel un niveau d'accès autorisé consiste à pouvoir reprogrammer le système de traitement embarqué ; ou
dans lequel un niveau d'accès correspond à l'une des opérations suivantes : maintenance, réparation ou révision ; ou
dans lequel un niveau d'accès correspond à au moins un type de test ; ou
dans lequel une session prend fin après une période d'inactivité, ou lorsque l'utilisateur demande à se déconnecter.
